Europäisches Patentamt

European Patent Office

Office européen des brevets

(19)

(11) EP 0 813 154 A1

(12) **DEMANDE DE BREVET EUROPEEN**

(43) Date de publication:
**17.12.1997 Bulletin 1997/51**

(51) Int Cl.⁶: **G06F 13/40**, G06F 13/16

(21) Numéro de dépôt: **97401296.5**

(22) Date de dépôt: **09.06.1997**

(84) Etats contractants désignés:
**DE FR GB IT**

(30) Priorité: **10.06.1996 FR 9607162**

(71) Demandeur: **BULL S.A.**
**78430 Louveciennes (FR)**

(72) Inventeurs:
• **Abily, Jack**
**78370 Plaisir (FR)**
• **Qian, Jean Yujun**
**95800 Cergy Saint-Christophe (FR)**

(54) **Circuit pour transborder des données entre mémoires distantes et calculateur comprenant un tel circuit**

(57) Pour transborder des blocs de données d'une unité mémoire source (8,9,12) vers une unité mémoire cible (12,8,9), au moyen d'un chemin de données (5,6,7), les blocs transbordés n'étant pas nécessairement cadrés sur les blocs de la mémoire source et de la mémoire cible, on utilise un circuit électrique (5) qui comprend un circuit (42) permettant de faire un cadrage avec un grain égal à la largeur du chemin de données. Pour diminuer la latence, le cadrage se fait au moyen d'un registre à décalage de capacité mémoire réduite à celle d'un bloc.

FIG.1

EP 0 813 154 A1

## Description

Le domaine de l'invention est celui du transbordement de données (move en anglais) entre mémoires distantes pour des systèmes informatiques.

Aujourd'hui, la baisse constante du prix de la mémoire binaire permet des augmentations de capacité considérables. Cependant cette augmentation de capacité risque d'augmenter corrélativement une certaine inertie dans l'exploitation de la mémoire. C'est pourquoi, il est connu d'utiliser une unité de mémoire principale dont la taille, bien que conséquente, permette un accès rapide et une ou plusieurs unités de mémoire étendue dont le contenu est vu à travers la mémoire principale à l'aide d'un adressage virtuel. Seules, les données effectivement utilisées par le système sont physiquement résidentes dans la mémoire principale. Pour effectuer des traitements sur des données physiquement résidentes dans une unité de mémoire étendue, le système transborde (move en anglais) ces données dans la mémoire principale. Pour faire de la place dans l'unité de mémoire principale, le système transborde également des données vers l'unité de mémoire étendue.

La distance entre une unité de mémoire étendue et l'unité de mémoire principale amène inévitablement une certaine latence entre le début et la fin d'un transbordement. Couramment, une unité mémoire est subdivisée en pages, elles même constituées de blocs de données. Pour ne pas pénaliser les performances du système par des transbordements trop fréquents, il est préférable de les effectuer par blocs, voire par pages.

Cependant, l'optimisation de l'adressage virtuel peut faire que des blocs de données de l'unité de la mémoire étendue ne soient pas parfaitement cadrés sur les blocs de données de la mémoire principale. De plus, la répartition des pages contenant les blocs à transborder n'est pas nécessairement identique entre la mémoire principale et la mémoire étendue.

Une solution consisterait à transférer les blocs à transborder tels que cadrés dans la mémoire source dans une mémoire intermédiaire où ils subiraient un traitement les recadrant sur la mémoire de destination ou mémoire cible. Cependant, si les capacités mémoire nécessaires à cette étape intermédiaire ne posent pas de problèmes insurmontables à l'heure actuelle, la latence supplémentaire introduite peut présenter quelque inconvénient quant aux performances du système.

L'objet de l'invention est de réduire au minimum la latence entre le début et la fin d'un transbordement par mémorisation intermédiaire minimale. Ceci est obtenu à l'aide d'un circuit électrique pour transborder des blocs de données d'une unité mémoire source vers une unité mémoire cible, au moyen d'un chemin de données, les blocs transbordés n'étant pas nécessairement cadrés sur les blocs de la mémoire source et de la mémoire cible, caractérisé en ce qu'il comprend un circuit permettant de faire un cadrage avec un grain égal à la largeur du chemin de données.

Pour diminuer la latence, le cadrage se fait au moyen d'un registre à décalage de capacité mémoire réduite à celle d'un bloc.

Il est intéressant d'utiliser un tel circuit dans un calculateur pour déclencher des transbordements entre son unité de mémoire principale et une ou plusieurs mémoires étendues distantes.

L'invention sera mieux comprise à l'aide de la description qui suit en référence aux figures.

La figure 1 représente un système informatique avec un calculateur ayant accès à au moins une unité de mémoire étendue selon l'invention.

La figure 2 représente une mise en oeuvre possible du circuit de l'invention dans le système de la figure 1.

La figure 3 représente un premier niveau de raffinement de l'architecture du circuit selon l'invention.

Les figures 5 à 7 représentent un second niveau de raffinement de l'architecture du circuit selon l'invention.

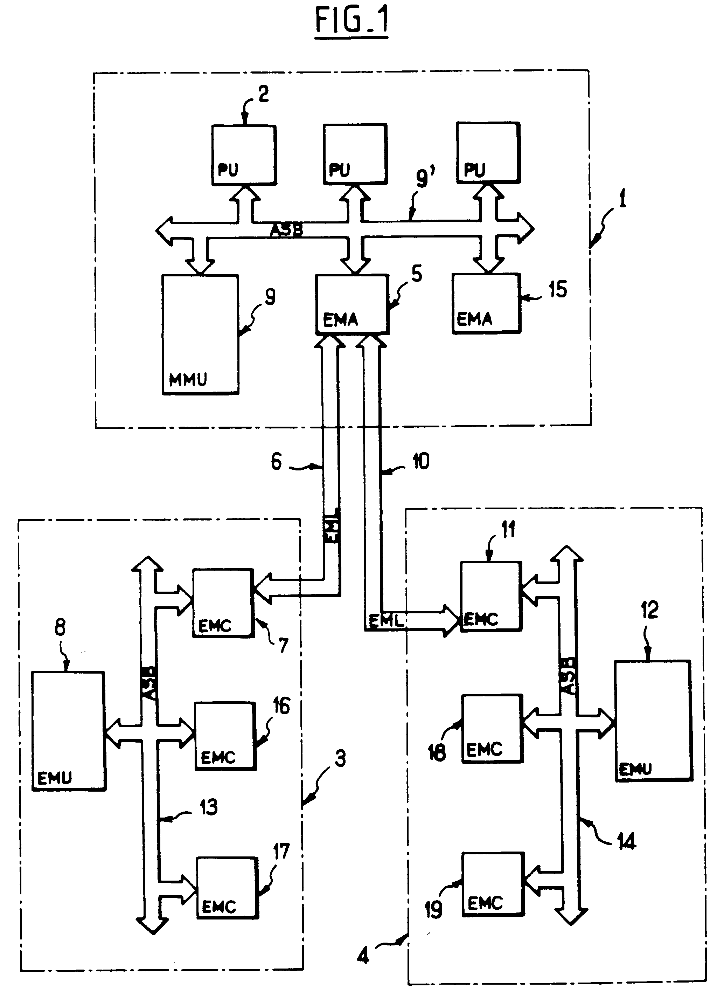

Sur la figure 1, un calculateur 1 comprend une unité de mémoire principale MMU 9 à laquelle accède au moins une unité processeur PU 2 au moyen d'un bus système ASB 9'. Sur le bus ASB 9' sont raccordées une ou plusieurs interfaces EMA d'accès à mémoire étendue. L'interface EMA 5 est reliée à un contrôleur de mémoire étendue EMC 7 situé dans un cabinet 3 distant du calculateur 1, au moyen d'une liaison EML 6. Une liaison EML peut être une liaison série ou une liaison parallèle permettant un transfert d'informations à débit élevé. Le cabinet 3 comprend une unité de mémoire étendue EMU 8 à laquelle accède le contrôleur de mémoire étendue 7 au moyen d'un bus système ASB 13. D'autres contrôleurs EMC 16, 17, sans que la quantité représentée sur la figure ne soit limitative peuvent être prévus pour accéder également à l'unité de mémoire étendue EMU 8 au moyen du bus système 13. Le contrôleur 16 permet par exemple d'échanger des données avec un autre calculateur non représenté, selon le même schéma que pour le calculateur 1. Il est possible de prévoir que l'interface 5 soit également reliée à un contrôleur de mémoire étendue EMC 11 situé dans un cabinet 4 au moyen d'une liaison EML 10. Comme le cabinet 3, le cabinet 4 comprend une unité de mémoire étendue EMU 12 à laquelle accède le contrôleur de mémoire étendue 11 au moyen d'un bus système ASB 14. D'autres contrôleurs EMC 18, 19, sans que la quantité représentée sur la figure ne soit limitative peuvent être prévus pour accéder également à l'unité de mémoire étendue EMU 12 au moyen du bus système 14. Le contrôleur 18 permet par exemple d'échanger des données avec un autre calculateur non représenté, selon le même schéma que pour le calculateur 1. L'unité de mémoire étendue 12 permet de servir de sauvegarde ou d'augmentation de capacité de l'unité de mémoire étendue 8. En sauvegarde, l'unité de mémoire étendue EMU 12 permet la redondance des données mémorisées. En augmentation de capacité, l'unité de mémoire étendue 12 permet de disposer d'une plus grande mémoire étendue.

Le calculateur 1 de la figure 1 présente une deuxième interface EMA 15, reliée elle aussi au bus système 9'. En reliant un premier port de l'interface EMA 15 à un deuxième port du contrôleur EMC 16 et un deuxième port de l'interface 15 à un deuxième port du contrôleur EMC 18, au moyen de liaisons EML non représentées par souci de clarté de la figure, il est possible d'obtenir une redondance des connexions du calculateur 1 avec les cabinets 3 et 4.

Les unités de mémoire étendue EMU 8 et 12 sont subdivisées chacune en $2^j$ pages dont les adresses sont codées sur j bits. Chaque page est à son tour subdivisée en $2^k$ blocs de données dont les adresses sont codées sur k bits. La largeur du chemin de données de l'interface EMA 5 au contrôleur EMC 7 par la liaison EML 6 est de $2^m$ multiplets. Un multiplet est par exemple un octet ou un nonet. Ainsi $2^m$ multiplets constituent un sous bloc d'un bloc de données. Chaque bloc de données contient $2^n$ sous blocs, adressables sur n bits à l'intérieur d'un bloc.

Dans le calculateur 1, un transbordement de données entre l'unité de mémoire principale MMU 9 et l'unité de mémoire étendue EMU 8 ou l'unité de mémoire étendue EMU 12 se fait à la demande d'une unité processeur PU du calculateur 1. Une unité processeur PU du calculateur 1 peut aussi demander un transbordement direct entre l'unité de mémoire étendue EMU 8 et l'unité de mémoire étendue EMU 12. Pour cela, l'unité processeur PU envoie, sur ordre d'un processus en cours dans l'unité PU, une requête de transbordement à l'interface EMA 5 en lui spécifiant l'unité mémoire source dont seront extraites les données par blocs et l'unité mémoire cible où seront introduites les données par blocs. Si l'unité mémoire source est l'unité de mémoire principale MMU 9, l'unité mémoire cible est l'unité de mémoire étendue EMU 8 ou l'unité de mémoire étendue EMU 12. Si l'unité mémoire source est l'unité de mémoire étendue EMU 8, respectivement 12, l'unité mémoire cible est l'unité de mémoire principale MMU 9 ou l'unité de mémoire étendue EMU 12, respectivement 8. Le processus à l'origine du transbordement spécifie également dans sa requête l'adresse du premier sous bloc dans la mémoire source, l'adresse du premier sous bloc dans la mémoire cible où commence le transbordement et la quantité de sous blocs à transborder. A partir de là, l'interface EMA 5 effectue le transbordement indépendamment de l'unité processeur PU.

Un processus peut demander un transbordement synchrone ou un transbordement asynchrone. Dans le cas d'un transbordement synchrone, le processus est interrompu et ne reprend que lorsque le transbordement est terminé. Un transbordement synchrone nécessite donc d'être rapide. Dans le cas d'un transbordement asynchrone, le processus se poursuit sans attendre la fin du transbordement qui s'exécute de façon indépendante. Pour ne pas pénaliser un processus demandant un transbordement synchrone alors qu'un transbordement asynchrone est en cours, une requête de transbordement synchrone peut interrompre dans l'interface EMA un transbordement asynchrone en cours qui sera repris à la fin du transbordement synchrone. C'est l'interface EMA qui gère les interruptions et les reprises de transbordement, de façon transparente pour les processus exécutés par les unités processeur PU.

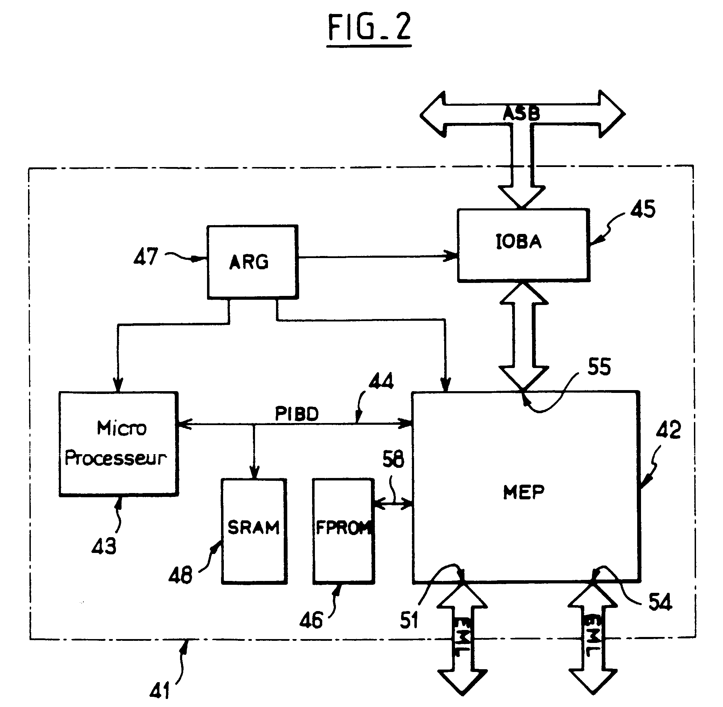

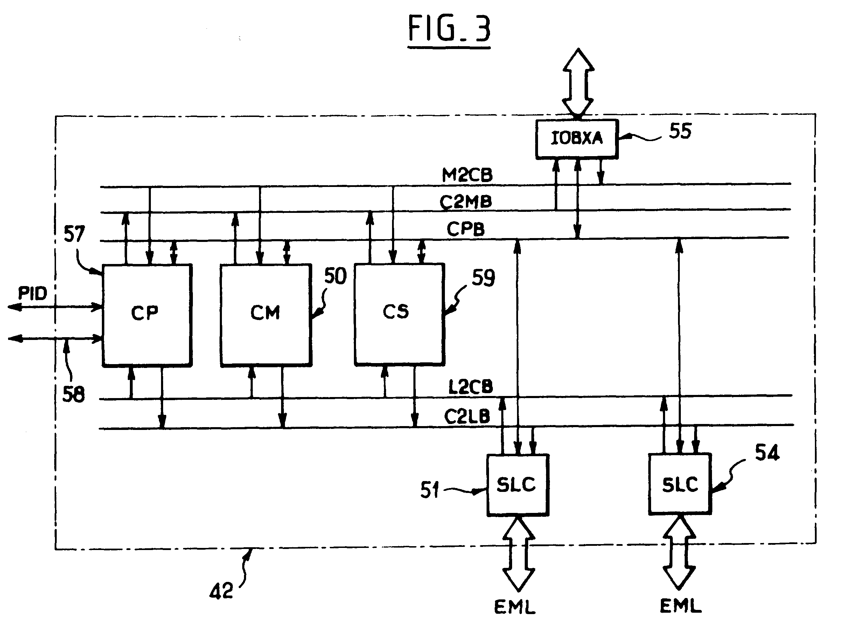

Une interface EMA ou un contrôleur mémoire EMC est réalisé au moyen d'un circuit 41 présenté plus en détail sur la figure 2. Le circuit 41 comprend essentiellement un circuit intégré MEP 42 détaillé à l'aide de la figure 3, synchronisé par un générateur d'horloge ARG 47 et piloté par un microprocesseur 43. Une mémoire permanente FPROM 46 contient un micro logiciel pour faire fonctionner le circuit intégré 42. Une mémoire à accès aléatoire SRAM 48 est prévue pour contenir les données qualifiant les transbordements pris en charge par le circuit 41. A l'initialisation du circuit 41, le circuit intégré 42 charge dans la mémoire 48, le micro logiciel contenu dans la mémoire 46. Pour ce faire, le circuit 42 accède directement à la mémoire 46 au moyen d'une liaison 58. La mémoire 46 garantit essentiellement la permanence des informations à l'initialisation alors que la mémoire 48 garantit les performances d'accès en fonctionnement. Si les standards de lecture écriture dans les mémoires 46 et 48 sont différents, par exemple sur un multiplet dans la mémoire 46 et sur huit multiplets dans la mémoire 48, le circuit intégré 42 fait les regroupements de multiplets nécessaires et génère les contrôles de parité adéquats. Un circuit d'adaptation bus IOBA 45 permet d'adapter le circuit 41 au bus système ASB pour le transfert de données entre le bus ASB et le circuit intégré 42. Le circuit 45 et le microprocesseur 43 sont synchronisés par le générateur d'horloge 47. Le microprocesseur 43 échange et traite les données de la mémoire 48 et du circuit 42 au moyen d'un bus PIBD 44 et du micro logiciel contenu dans la mémoire 48. Le circuit 42 comprend un port d'entrée sortie 55 en liaison avec le circuit d'adaptation 45 et deux ports d'entrée sortie 51 et 54 raccordés par liaison EML à un circuit distant identique au circuit 41. Un circuit 41 fonctionnant en EMA est raccordé à un circuit 41 fonctionnant en EMC. La largeur de chemin de données est identique sur les ports 51, 54 et 55 et égale à $2^m$ multiplets. L'intérêt de l'adaptateur 45 est de pouvoir supporter une adressabilité différente d'une adressabilité standard sur les ports 51, 54 et 55. Par exemple, l'adressage sur les ports 51, 54 et 55 peut se faire sur 40 bits alors que l'adressage de l'unité de mémoire principale MMU peut se faire sur 32 bits.

La figure 3 présente l'architecture du circuit intégré 42. Un corps processeur CP 57 permet l'échange de données pour qualifier un transbordement avec le microprocesseur 43 au moyen du bus PIBD. Le corps processeur 57 est directement relié à la mémoire 46 par la liaison 58, pour charger à l'initialisation dans la mémoire 48, le micro logiciel contenu de façon permanente dans la mémoire 46. Un corps transbordeur CM 50 est activé par le corps processeur 57 dans le cas où le circuit intégré 42 est monté sur un circuit 41 qui occupe la place d'une interface EMA. Un corps contrôleur CS 59 est activé par le corps processeur 57 dans le cas où le circuit intégré 42 est monté sur un circuit 41 qui occupe la place d'un contrôleur EMC.

Par le port 55 passent les données échangées avec la mémoire localisée dans le même cabinet que celui dans lequel le circuit 41 est monté. Si le circuit 41 est monté dans le calculateur 1, la mémoire locale est l'unité de mémoire principale MMU, si le circuit 41 est monté dans un cabinet 3 ou 4, la mémoire locale est l'unité de mémoire étendue EMU. Un bus M2CB transfert les données du port 55 vers le corps processeur 57, vers le corps transbordeur CM 50 ou vers le corps contrôleur CS 59. Un bus C2MB transfert les données du corps processeur 57, du corps transbordeur CM 50 ou du corps contrôleur CS 59 vers le port 55. Par les ports 51 et 54 passent les données échangées avec les mémoires distantes. Si le circuit 41 est monté dans le calculateur 1, la mémoire distante est l'unité de mémoire étendue EMU d'un cabinet 3 ou 4, si le circuit 41 est monté dans un cabinet 3 ou 4, la mémoire distante est l'unité de mémoire principale MMU d'un calculateur. Un bus L2CB transfert les données du port 51, 54 vers le corps processeur 57, vers le corps transbordeur CM 50 ou vers le corps contrôleur CS 59. Un bus C2LB transfert les données du corps processeur 57, du corps transbordeur CM 50 ou du corps contrôleur CS 59 vers le port 51, 54. Un bus CPB bidirectionnel permet au corps processeur 57 d'échanger des données avec les ports 51, 54, 55, avec le corps transbordeur 50 ou avec le corps contrôleur 59.

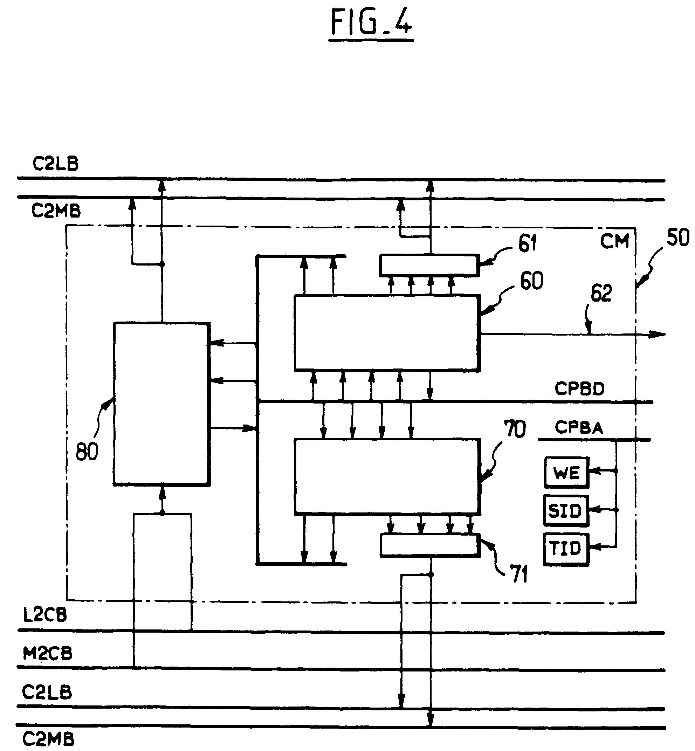

La figure 4 représente l'architecture du transbordeur CM 50. On retrouve ici le bus C2LB pour l'émission de requêtes vers l'unité de mémoire étendue EMU, le bus C2MB pour l'émission de requêtes vers l'unité de mémoire principale MMU, le bus L2CB pour la réception de réponses de l'unité de mémoire étendue EMU et le bus M2CB pour la réception de réponses de l'unité de mémoire principale MMU. Le bus CPB est décomposé en un bus de données CPBD et un bus d'adressage CPBA.

Le transbordeur CM 50 est constitué de trois parties principales:

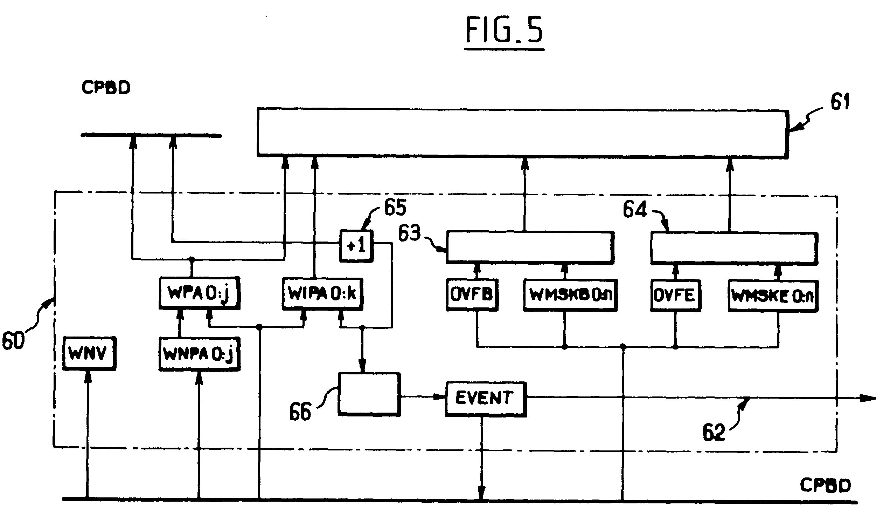

- Une unité logique 60 génère des adresses dans une mémoire de destination située dans l'unité de mémoire principale MMU ou de l'unité de mémoire étendue EMU. Comme nous le verrons à l'aide de la figure 5, l'unité logique 60 comprend différents registres internes pour traiter des requêtes d'écriture dirigées vers une page de $2^{k+n+m}$ multiplets de la mémoire de destination, au moyen d'un circuit 61 de transmission d'entêtes de messages. L'unité de mémoire principale MMU et l'unité de mémoire étendue EMU ne possèdent pas nécessairement le même nombre de pages, aussi $2^k$ représente-t-il un nombre différent suivant que la mémoire de destination est l'unité de mémoire principale MMU ou l'unité de mémoire étendue EMU. Le circuit 61 émet sur le bus C2LB si la mémoire de destination est l'unité de mémoire étendue EMU et sur le bus C2MB si la mémoire de destination est l'unité de mémoire principale MMU. D'autre part, l'unité logique 60 est raccordée au bus CPBD pour échanger les données de ses registres internes avec le micro logiciel exécuté par le microprocesseur 43. L'unité logique 60 est aussi directement raccordée au contrôleur d'interface processeur CP 57 pour un échange de signaux d'interruptions avec le micro logiciel au moyen d'une liaison 62.

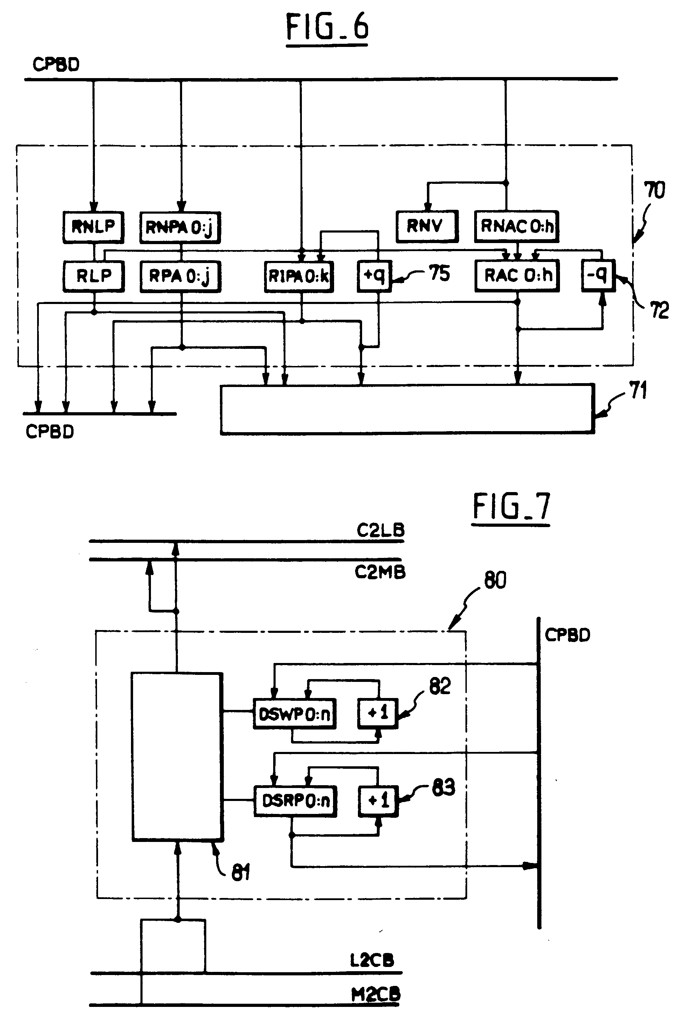

- Une unité logique 70 génère des adresses dans une mémoire source située dans l'unité de mémoire principale MMU ou dans l'unité de mémoire étendue EMU. Comme nous le verrons à l'aide de la figure 6, l'unité logique 70 comprend différents registres internes pour traiter des requêtes de lecture dirigées vers une page de $2^{k+n+m}$ multiplets de la mémoire source, au moyen d'un circuit 71 de transmission d'entêtes de messages. L'unité de mémoire principale MMU et l'unité de mémoire étendue EMU ne possèdent pas nécessairement le même nombre de pages, aussi $2^k$ représente-t-il un nombre différent suivant que la mémoire source est l'unité de mémoire principale MMU ou l'unité de mémoire étendue EMU. Le circuit 71 émet sur le bus C2LB si la mémoire source est l'unité de mémoire étendue EMU et sur le bus C2MB si la mémoire source est l'unité de mémoire principale MMU. D'autre part, l'unité logique 70 est raccordée au bus CPBD pour échanger les données de ses registres internes avec le micro logiciel exécuté par le microprocesseur 43.

- Un circuit de cadrage 80 transfère des données présentes sur l'un des bus L2CB ou M2CB vers le bus C2MB si la mémoire de destination est l'unité de mémoire principale MMU ou vers le bus C2LB si la mémoire de destination est l'unité de mémoire étendue EMU. Comme nous le verrons à l'aide de la figure 7, le circuit de cadrage comprend différents registres internes dont le contenu est échangé avec le micro logiciel au moyen du bus CPBD.

Le transbordeur CM 50 comprend encore trois registres internes WE, SID et TID accessibles en écriture par micro logiciel au moyen du bus CPBA. Le registre WE est destiné à contenir une autorisation d'écriture dans la mémoire de destination. Les deux registres SID et TID sont destinés à contenir l'information globale pour un processus de transbordement. Le registre SID contient deux bits dont la combinaison identifie la mémoire source. Par exemple, la mise à zéro du premier bit indique que la mémoire source est l'unité de mémoire principale MMU et la mise à un du premier bit indique que la mémoire source est une unité de mémoire étendue EMU; le deuxième bit est alors disponible pour préciser quelle unité de mémoire étendue EMU est la mémoire source. Le registre TID contient l'identification de la cible 51, 54, 55 du transbordement. Le registre TID contient deux bits dont la combinaison identifie la mémoire de destination. Par exemple, la mise à zéro du premier bit indique que la mémoire de destination est l'unité de mémoire principale MMU et la mise à un du premier bit indique que la mémoire de destination est une unité de mémoire étendue EMU; le deuxième bit est alors disponible pour préciser quelle unité de mémoire étendue EMU est la mémoire de destination. Il est ainsi possible de faire un transbordement de l'unité de mémoire principale MMU 9 vers l'unité de mémoire étendue EMU 8 ou l'unité de mémoire étendue EMU 12, de l'unité de mémoire étendue EMU 8 ou de l'unité de mémoire étendue EMU 12 vers l'unité de mémoire principale MMU 9. Il est encore possible de faire un transbordement directement de l'unité de mémoire étendue EMU 8 vers l'unité de mémoire étendue EMU 12 ou de l'unité de mémoire étendue EMU 12 vers l'unité de mémoire étendue EMU 8 sans passer par l'unité de mémoire principale MMU.

La figure 5 représente plus en détails l'unité logique 60. Sur cette figure, les registres destinés à contenir une adresse de la mémoire de destination sont indiqués par une abréviation mnémotechnique suivie du numéro du premier bit et de la longueur utile du registre, exprimée en bits. Les autres registres sont simplement indiqués à l'aide d'une abréviation mnémotechnique.

Quatre registres OVFB, WMSKB, OVFE et WMSKE sont accessibles en écriture par micro logiciel au moyen du bus CPBD. Le registre OVFB est destiné à contenir une indication pour l'accès en écriture dans le premier bloc de la mémoire de destination à recevoir le transbordement. Comme nous l'avons dit précédemment, un bloc est formé de $2^n$ sous blocs. Le registre WMSKB est destiné à contenir un masque, codé sur n bits, spécifiant dans ledit premier bloc, le sous-bloc de $2^m$ multiplets où débute l'écriture. Le registre OVFE est destiné à contenir une indication pour l'accès en écriture dans le dernier bloc de la mémoire de destination à recevoir le transbordement. Le registre WMSKE est destiné à contenir un masque, codé sur n bits, spécifiant dans ledit dernier bloc, le sous-bloc de $2^m$ multiplets où termine l'écriture. Un circuit 63 est destiné à transmettre au circuit 61 l'adresse, dans la mémoire de destination, du premier sous bloc qui fera l'objet d'un transbordement. Cette adresse est élaborée à l'aide du contenu des registres OVFB et WMSKB. Un circuit 64 est destiné à transmettre au circuit 61 l'adresse, dans la mémoire de destination, du dernier sous bloc qui fera l'objet d'un transbordement. Cette adresse est élaborée à l'aide du contenu des registres OVFE et WMSKE.

Deux registres WPA et WIPA sont accessibles en écriture et en lecture par micro logiciel au moyen du bus CPBD. Le registre WPA est destiné à contenir l'adresse, codée sur j bits, de la page de la mémoire de destination vers laquelle le transbordement est en cours. Le registre WIPA est destiné à contenir l'adresse, codée sur k bits, du bloc vers lequel le transbordement est en cours, à l'intérieur de la page pointée par le contenu du registre WPA. Le contenu des registres WPA et WIPA sera transféré vers le circuit 61.

Vu du circuit EMA 5, il est possible de faire des écritures $W2^{n+m}B$ de $2^{n+m}$ multiplets et des écritures partielles $PW2^{n+m}B$ sur un bloc complet de l'unité de mémoire étendue EMU distante. Les requêtes en écriture par blocs complets accélère les vitesses de transfert de données. Dès le début d'écriture dans la mémoire de destination, si celle-ci est l'unité de mémoire étendue EMU, le registre WIPA s'incrémente alors comme expliqué dans le paragraphe suivant. Le circuit EMA 5 prévoit des écritures possibles W2PB à l'intérieur d'un bloc de l'unité de mémoire principale MMU locale, par sous blocs de $2^p$ multiplets avec des écritures partielles $PW2^pB$ à l'intérieur d'un sous bloc de $2^p$ multiplets, p prenant différentes valeurs inférieures ou égales à $2^{n+m}$. En début d'écriture dans la mémoire de destination, si celle-ci est l'unité de mémoire principale MMU, il peut s'avérer nécessaire de faire une écriture partielle $PW2^pB$ à l'intérieur d'un sous bloc de $2^p$ multiplets suivie d'écritures $W2^pB$ à l'intérieur d'un bloc de $2^{n+m}$ multiplets avant que l'écriture ne se poursuive en début de bloc de la mémoire de destination. Dans ce cas, le contenu du registre WIPA reste figé jusqu'à ce que l'écriture se poursuive en début de bloc de la mémoire de destination. Dès que l'écriture se poursuit en début de bloc de la mémoire de destination, le registre WIPA s'incrémente alors comme expliqué dans le paragraphe suivant.

A chaque transfert du contenu du registre WIPA vers le circuit 61, le contenu du registre WIPA est incrémenté d'une unité au moyen d'un circuit 65, de façon à accéder au bloc suivant à l'intérieur d'une même page. A chaque débordement du registre WIPA, un circuit 66 génère une interruption dans un registre EVENT relié directement au contrôleur d'interface processeur CP 57 par la liaison 62. Le registre EVENT permet de mémoriser la source d'une interruption, il est accessible par micro logiciel en lecture au moyen du bus CPBD.

Deux registres WNV et WNPA sont accessibles en écriture par micro logiciel au moyen du bus CPBD. Le registre WNPA est destiné à contenir l'adresse, codée sur j bits, d'une page succédant à la page vers laquelle le transbordement est en cours. Le contenu du registre WNPA est destiné à être chargé dans le registre WPA lorsque le registre WNV indique que ce contenu est valide et lorsque la page précédente est terminée.

La figure 6 représente plus en détails l'unité logique 70 avec les mêmes conventions que pour la figure 5.

Quatre registres RPA, RIPA, RAC et RLP sont accessibles en écriture par micro logiciel au moyen du bus CPBD. Le registre RPA est destiné à contenir l'adresse, codée sur j bits, de la page de la mémoire source à partir de laquelle le transbordement est en cours de demande. Le registre RIPA est destiné à contenir l'adresse, codée sur k bits, du bloc à partit duquel le transbordement est en cours de demande, à l'intérieur de la page pointée par le contenu du registre RPA. Les sorties des registres RPA et RIPA sont reliées au circuit 71 pour générer les adresses d'accès en mémoire source. A chaque transfert du contenu du registre RIPA vers le circuit 71, le contenu du registre RIPA est incrémenté d'un nombre q au moyen d'un circuit 75. Le registre RAC est destiné à contenir le nombre de blocs, codé sur h bits, auxquels il reste à accéder dans la page pointée par le contenu du registre RPA. Généralement, h est égal à k+1 de façon à pouvoir coder le nombre maximal $2^k$ de blocs contenus dans une page. A chaque transfert du contenu du registre RAC vers le circuit 71, le contenu du registre RAC est décrémenté du nombre q au moyen d'un circuit 72. Le nombre q représente une quantité de blocs contigus accessibles par une seule instruction de lecture. Le registre RLP est destiné à contenir une marque indiquant si la page pointée par le contenu du registre RPA est la dernière page à laquelle accéder lors d'un transbordement. Les registres RLP, RPA et RIPA sont accessibles en lecture par micro logiciel au moyen du bus CPBD.

Quatre registres RNPA, RNAC, RNLP et RNV sont accessibles en écriture par micro logiciel au moyen du bus CPBD. Le registre RNPA est destiné à contenir l'adresse, codée sur j bits, de la page de la mémoire source succédant à la page à partir de laquelle le transbordement est en cours de demande. Le registre RNAC est destiné à contenir le nombre de blocs, codé sur h bits, auxquels il reste à accéder dans la page pointée par le contenu du registre RNPA. Le registre RNLP est destiné à contenir une marque indiquant si la page pointée par le contenu du registre RNPA est la dernière page à laquelle accéder lors d'un transbordement. Le contenu de chaque registre RNPA, RNAC et RNLP sera transféré respectivement vers le registre RPA, RAC et RLP si le contenu du registre RNV indique que les contenus des registres RNPA, RNAC et RNLP sont valides pour être transférés.

La figure 7 représente plus en détails le circuit de cadrage 80. Une pile 81, de type PEPS (Premier Entré Premier Sorti) reçoit en entrée des données à partir du bus L2CB ou du bus M2CB et délivre en sortie ses données sur le bus C2MB ou sur le bus C2LB. La pile 81 est constituée $2^n$ éléments dont chacun contient un nombre de bits égal à la largeur du chemin de données sur les bus C2LB, C2MB, L2CB et M2CB. Deux registres DSWP et DSRP sont accessibles en écriture par micro logiciel au moyen du bus CPBD. Le registre DSRP est destiné à contenir un pointeur sur un élément de la pile 81 pour son écriture sur le bus C2LB si la mémoire de destination est l'unité de mémoire étendue EMU ou son écriture sur le bus C2MB si la mémoire de destination est l'unité de mémoire principale MMU. Le contenu du registre DSRP est incrémenté d'une unité au moyen d'un circuit 83, à chaque écriture d'un élément sur l'un des bus C2LB ou C2MB. Le registre DSWP est destiné à contenir un pointeur sur un élément de la pile 81 pour sa lecture à partir du bus L2CB si la mémoire source est l'unité de mémoire étendue EMU ou pour sa lecture à partir du bus M2CB si la mémoire source est l'unité de mémoire principale MMU. Le contenu du registre DSWP est incrémenté d'une unité au moyen d'un circuit 82, à chaque lecture d'un élément sur l'un des bus L2CB ou M2CB. Le registre DSRP est accessible en lecture par micro logiciel au moyen du bus CPBD.

La suite de la description explique le fonctionnement d'un transbordement. Un transbordement s'effectue au moyen du transbordeur 50 sur demande d'un processeur du calculateur contenant l'unité de mémoire principale MMU. Pour cela, le processeur demandant le transbordement envoie au circuit 41, via le bus ASB, une suite de données d'initialisation qualifiant le transbordement. Ces données d'initialisation sont transmises dans le circuit 41, à la mémoire 48 via le bus M2CB, le contrôleur d'interface processeur CP 57 et le bus PID. Au moyen du micro logiciel résidant dans la mémoire 48, le microprocesseur pilote le transbordement à partir de ces données.

Les annexes 1 et 2 donnent un exemple de séquences du dit micro logiciel pour initialiser le contenu des registres précédemment décrits, au démarrage d'un transbordement. Pour simplifier la compréhension, les valeurs des registres nommés en majuscules sur les figures, sont nommées en minuscules de façon identiques dans les lignes d'instructions.

L'annexe 1 décrit l'initialisation pour les accès en lecture de la première page de la mémoire source et en écriture de la première page de la mémoire de destination.

- Les lignes 1 à 4 rangent dans le registre TID la valeur 00 ou 01 pour un transbordement à partir d'une unité de mémoire étendue EMU distante repérée 0 ou 1, ou la valeur 1x pour un transbordement à partir de l'unité de mémoire principale MMU locale.
- La ligne 5 range dans le registre SID l'identificateur du port en liaison avec la mémoire source, par exemple 00 pour le port 55, 10 pour le port 51 et 11 pour le port 54.
- La ligne 6 inhibe la transmission d'accès en écriture dans la mémoire de destination par mise à zéro du contenu du registre WE.
- Les lignes 7 à 16 permettent d'initialiser les accès en lecture dans la page de la mémoire source où débute le transbordement.

L'unité de mémoire étendue EMU et l'unité de mémoire principale MMU sont divisées en pages. Chaque page est à son tour divisée en $2^k$ blocs de $2^n$ sous blocs. Chaque sous bloc comprend $2^m$ multiplets. Ainsi, dans une mémoire contenant au plus $2^j$ pages, l'adresse de chaque multiplet est codée sur j+k+n+m bits.

Parmi les données d'initialisation figurent trois valeurs:

- rad[{i}0:j+k+n+m] représente une adresse de départ de $i^{\text{ème}}$ page de mémoire source codée à partir du bit 0 sur une longueur de j+k+n+m bits; suivant la même convention d'écriture, il est possible d'extraire de cette donnée, par exemple rad[{0}j+k:n] qui représente l'adresse du premier sous bloc transféré à l'intérieur de la page;
- wad[{i}0:j+k+n+m] représente une adresse de départ de $i^{\text{ème}}$ page de mémoire de destination codée à partir du bit 0 sur une longueur de j+k+n+m bits;
- un nombre lgthxmB qui représente une longueur de transbordement en unités de sous blocs de $2^m$ multiplets.

La ligne 7 de micro logiciel calcule la longueur d'un transbordement par blocs de $2^{n+m}$ multiplets. Nous expliquons à présent le fondement de la formule utilisée.

Pour accélérer le transbordement, l'extraction de la mémoire source s'effectue par blocs de $2^{n+m}$ multiplets. Un nombre lgthxn de blocs de $2^{n+m}$ multiplets accédés en lecture dans la mémoire source est calculé à partir du nombre lgthxmB. Un transbordement débute à un sous bloc quelconque à l'intérieur d'un bloc. Le premier bloc à extraire de la mémoire source comprend alors un nombre x de sous blocs, donné par la formule:

$$x = 2^n - \text{rad}[\{0\}\, j{+}k{:}n]$$

La division entière par $2^n$ du nombre (lgthxmB-x) donne un nombre y de blocs entiers à transborder:

$$y = (\text{lgthxmB} - x) / 2^n$$

Si le reste de la division entière est un nombre z non nul, il est nécessaire d'extraire un bloc supplémentaire de la mémoire source pour transborder les z sous blocs restants. Le nombre z étant compris entre 0 et $2^n$-1, la division entière de $(z + 2^n{-}1)$ par $2^n$ donne une quantité q de bloc supplémentaire (au plus égale à l'unité):

$$q = (z + 2^n - 1) / 2^n$$

Finalement, le nombre lgthxn de blocs à extraire de la mémoire source est donné par la formule:

$$\text{lgthxn} = 1 + y + q = 1 + (2^n y + z + 2^n - 1) / 2^n$$

Or :

$$z = \text{lgthxmB} - x - 2^n y$$

Donc:

$$\text{lgthxn} = 1 + (\text{lgthxmB} + \text{rad}[\{0\}\, j{+}k{:}n] - 1) / 2^n$$

- La ligne 8 range sur les j bits du registre RPA l'adresse de la première page de la mémoire source dans laquelle débute le transbordement.
- La ligne 9 range sur les k bits du registre RIPA l'adresse du premier sous bloc de la mémoire source sur lequel débute le transbordement.
- Le lignes 10 à 16 permettent de ranger dans le registre RAC le nombre de blocs à extraire de la première page accédée dans la mémoire source, codé sur (k+1) bits, et dans le registre RLP une valeur indiquant si la première page accédée est ou n'est pas la dernière. Si le nombre lgthxn de blocs à extraire de la mémoire source est supérieur ou égal au nombre de blocs contenus entre l'adresse du premier bloc à extraire et le contenu maximal d'une page compté en blocs, il est nécessaire d'accéder à des pages suivantes pour extraire la totalité des blocs de la mémoire source. Une valeur, par exemple 0 est rangée dans le registre RLP pour indiquer que la première page accédée n'est pas la dernière. Le nombre de blocs contenus entre l'adresse du premier bloc à extraire et le contenu maximal d'une page est rangé dans le registre RAC. Le nombre restant de blocs à extraire au delà de la première page est à considérer comme nouveau nombre lgthxn de blocs à extraire de la mémoire source. Si le nombre lgthxn de blocs à extraire de la mémoire source est inférieur au nombre de blocs contenus entre l'adresse du premier bloc à extraire et le contenu maximal d'une page compté en blocs, il n'est pas nécessaire d'accéder à des pages suivantes pour extraire la totalité des blocs de la mémoire source. Une valeur, par exemple 1 est rangée dans le registre RLP pour indiquer que la première page accédée est la dernière. La première page accédée contient la totalité des blocs quantifiée par le nombre lgthxn de blocs à extraire de la mémoire source, le nombre lgthxn est rangé dans le registre RAC. Un contenu du registre RAC différent de zéro conduit à la génération d'accès en lecture dans la mémoire source.

Les lignes 17 à 27 initialisent des accès en écriture dans la première page de la mémoire de destination où débute le transbordement.

- La ligne 17 range l'adresse wad[{0}0:j] de la première page accédée dans le registre WPA d'adresse de page courante dans la mémoire de destination.
- La ligne 18 range l'adresse wad[{0}j:k] du premier bloc accédé dans le registre WIPA d'adresse à l'intérieur d'une page courante dans la mémoire de destination.
- La ligne 19 range l'adresse wad[{0}j+k:n] du premier sous bloc accédé à l'intérieur du premier bloc, dans le registre WMSKB de masque de début d'écriture dans la mémoire de destination.
- La ligne 20 range l'adresse (wad[{0}j+k:n]+lgthmB-1) modulo $2^n$ du dernier sous bloc accédé à l'intérieur du dernier bloc, dans le registre WMSKE de masque de fin d'écriture dans la mémoire de destination.
- La ligne 21 calcule la différence entre l'adresse wad[{0}j+k:n] du premier sous bloc accédé en écriture à l'intérieur du premier bloc et l'adresse rad[{0}j+k:n] du premier sous bloc accédé en lecture à l'intérieur du premier bloc. Cette différence représente l'écart d'alignement dans le premier bloc transbordé entre le lieu où le premier sous bloc sera écrit dans le premier bloc de la mémoire de destination et le lieu où le premier sous bloc sera lu dans le premier bloc de la mémoire source. Cette différence modulo $2^n$ est rangée dans le registre DSWP. Si, à l'intérieur du bloc transbordé, la situation du premier sous bloc écrit précède celle du premier sous bloc lu, le calcul de la différence provoque un dépassement qui signifie que la lecture du premier bloc dans la mémoire source ne suffit pas à terminer l'écriture du premier bloc dans la mémoire de destination.
- La ligne 22 range dans le registre OVFB une indication de dépassement sur le calcul résultant de la ligne 21.
- La ligne 23 calcule la différence entre l'adresse du dernier sous bloc à écrire dans la mémoire de destination et l'écart calculé ligne 21. A la ligne 7, on a calculé le nombre lgthxn de blocs à lire dans la mémoire source pour mettre à jour la mémoire cible. Si l'écart calculé ligne 21 est supérieur à l'adresse du dernier sous bloc, le calcul de la différence provoque un dépassement rangé dans le registre OVFE. Ceci permet au combinatoire matériel du circuit 60 de prendre en compte le fait que le dernier bloc reçu de la mémoire source chevauche deux blocs de la mémoire cible.
- Les lignes 24 à 27 permettent de ranger dans le registre DSRP le pointeur en lecture dans la pile 81. Si la mémoire de destination est l'unité de mémoire principale MMU, locale, le registre DSRP est initialisé avec la valeur contenue dans le registre WMSKB. Ceci permet de commencer l'écriture du premier sous bloc à l'adresse appropriée à l'intérieur d'un bloc de la mémoire de destination à l'aide d'instructions d'écriture W2$^p$B et si besoin est d'une première instruction d'écriture partielle PW2$^p$B. Si la mémoire de destination est l'unité de mémoire étendue EMU, distante, le registre DSRP est initialisé avec une valeur nulle car l'écriture du premier sous bloc à l'adresse appropriée à l'intérieur d'un bloc de la mémoire de destination peut se faire directement à l'intérieur de la totalité d'un bloc, à l'aide d'une écriture partielle PW2$^{n+m}$B.
- La ligne 28 met à 1 le registre WE pour valider la transmission d'accès en écriture dans la mémoire de destination qui se fera au fur et à mesure de la réception des réponses en provenance de la mémoire source.

L'annexe 2 décrit l'initialisation si besoin pour les accès en lecture de la page suivante de la mémoire source et en écriture de la page suivante de la mémoire de destination.

- La ligne 1 range sur les j bits du registre RNPA l'adresse de la deuxième page de la mémoire source dans laquelle se poursuivra le transbordement.
- Les lignes 2 à 8 reprennent les lignes 10 à 16 de l'annexe 1, appliquées à la page suivante en tenant compte que le premier sous bloc est alors écrit en début de page.
- La ligne 9 valide le contenu des registres RNLP, RNPA et RNAC après exécution des lignes 1 à 8.

La ligne 10 range l'adresse wad[(1)0:j] de la deuxième page accédée dans le registre WNPA d'adresse de page suivante dans la mémoire de destination.

- La ligne 11 valide le contenu du registre WNPA après exécution de la ligne 10.

Nous expliquons à présent comment s'effectue un transbordement après la phase d'initialisation. Les contenus des registres RLP, RPA, RIPA et RAC sont transférés au circuit 71. Le circuit 71 élabore à partir des contenus des registres RPA et RIPA une requête en lecture de q blocs dans la mémoire source. A chaque transfert du contenu des registres, le contenu du registre RIPA est incrémenté de q au moyen du circuit 75 et le contenu du registre RAC est décrémenté de la même valeur q. Ensuite les opérations précédentes se répètent jusqu'à ce que le contenu du registre RAC passe par zéro. Lorsque le contenu du registre RAC passe par zéro, si le contenu du registre RLP indique une dernière page, le circuit 71 lève un bit LMOS dans la requête pour indiquer une fin de transbordement. Si le contenu du registre RLP n'indique pas une dernière page, un contenu valide du registre RNV provoque le transfert des registres RNLP, RNPA et RNAC respectivement dans les registres RLP, RPA et RAC et le contenu du registre RNV est invalidé. Le micro logiciel recharge les registres RNLP, RNPA, RNAC et RNV. Les opérations précédemment décrites se réitèrent jusqu'à la fin du transbordement indiqué par la levée du bit LMOS qui constitue une marque de fin de transbordement.

Les requêtes en lecture sont envoyées sous forme de messages à l'unité de mémoire principale MMU, au moyen du bus C2MB et de l'interface IOBXA, si la mémoire source est l'unité de mémoire principale MMU ou à l'unité de mémoire étendue EMU, au moyen du bus C2LB et de l'interface SLC appropriée, si la mémoire source est l'unité de mémoire étendue EMU. Pour chaque requête en lecture, la mémoire source envoie au circuit 42 un message ou plusieurs messages de réponse. Chaque message de réponse contient un bloc de données lues. Le circuit 42 reçoit une réponse à une requête avec une latence qui dépend de la longueur des liaisons et du traitement dans la mémoire source. L'ordre des messages de requête est conservé pour les messages de réponse. Si un message de requête fait appel à q blocs en lecture, q messages de réponse reviennent dans l'ordre des q blocs à l'intérieur du message de requête. L'ordre est conservé car les registres intermédiaires, sur le parcours total des requêtes puis des réponses, sont de type premier entré premier sorti.

A réception du premier message de réponse, le premier bloc de données du message est transmis au circuit de cadrage 80 en écrivant le premier sous bloc de ce bloc dans l'élément de la pile 81 pointé par le contenu du registre DSWP chargé lors de l'initialisation. Le contenu du registre DSWP est alors incrémenté à chaque écriture d'un sous bloc au moyen du circuit 82, pour écrire par sous blocs la totalité du bloc reçu, c'est à dire jusqu'à ce que le contenu du registre DSWP atteigne à nouveau sa valeur initiale. A ce moment le circuit 61 élabore une requête d'écriture dans la mémoire de destination au moyen des contenus des registres WPA, WIPA, OVFB, WMSKB, OVFE et WMSKE tels que chargés lors de l'initialisation. En fait, le démarrage en écriture démarre le plus tôt possible. Le premier bloc à écrire dans la mémoire de destination est rangé dans ce message à partir du circuit de cadrage 80. Pour cela, le premier sous bloc extrait de la pile 81 est celui contenu dans l'élément pointé par le contenu du registre DSRP chargé lors de l'initialisation. A chaque lecture d'un sous bloc de la pile 81, le contenu du registre DSRP est incrémenté au moyen du circuit 83 pour lire le sous bloc suivant.

Sauf éventuellement en début de transbordement, comme nous l'avons expliqué précédemment, chaque utilisation du contenu du registre WIPA par le circuit 61 provoque une incrémentation du registre WIPA au moyen du circuit 65 en vue de l'écriture du bloc suivant dans la mémoire de destination.

Lorsque le contenu du registre DSRP passe par zéro, le bloc suivant reçu de la mémoire source est écrit dans la pile 81 à partir de l'élément pointé par le contenu du registre DSWP Le circuit 61 élabore une requête d'écriture dans la mémoire de destination au moyen des contenus des registres WPA, WIPA, OVFB, WMSKB, OVFE et WMSKE. Chaque incrémentation du registre DSWP autorise la lecture d'un élément de la pile 81, pointée par le contenu du registre DSRP qui continue à s'incrémenter pour ranger un bloc complet dans le message de requête en écriture dans la mémoire de destination. Le circuit de cadrage se comporte alors comme un registre à décalage dont chaque élément a une capacité égale à la largeur du chemin de donnée, permettant ainsi le transfert vers la mémoire source de tous les blocs d'un message de réponse, correctement cadrés dans la mémoire de destination. A l'incrémentation du registre WIPA, le passage de son contenu par zéro signifie que la fin de la page courante a été atteinte. Le contenu du registre WPA est rechargé avec le contenu du registre WNPA validé par le registre WNV. Le registre WNV est invalidé. Le passage par zéro du contenu du registre WIPA provoque simultanément une interruption au moyen du circuit 61, rangée dans le registre EVENT et transmise au microprocesseur 43 pour recharger les registres WNV et WNPA si besoin est.

Le processus décrit au paragraphe précédent se poursuit jusqu'à la fin de réception par le circuit 42 du dernier message de réponse en provenance de la mémoire source, indiqué comme tel par la marque de fin indiquée par le bit LMOS que la mémoire source retransmet systématiquement dans ses réponses à partir des requêtes reçues.

Il est à noter que le registre WIPA dans le circuit 60 joue un rôle identique à celui du registre RIPA dans le circuit 70. Cependant le circuit 60 n'a pas besoin d'utiliser un compteur tel que le registre RAC du circuit 70. L'écriture des blocs dans la mémoire de destination se fait tels que les blocs arrivent dans le circuit de cadrage 80. D'autre part les registres d'anticipation RNPA, respectivement WNPA, permettent la lecture dans des pages de la mémoire source, respectivement l'écriture dans des pages de la mémoire de destination, non nécessairement contiguës. On remarque aussi que les requêtes et les réponses sont indépendantes. En effet, rien n'empêche les circuits 70 et 71 d'émettre des requêtes de lecture vers la mémoire source alors que les circuits 60 et 61 émettent des requêtes d'écritures vers la mémoire de destination qui résultent de réponses à des requêtes de lecture de loin antérieures. Dans le circuit 42, l'entrée des réponses de lecture est synchrone avec la sortie des requêtes en écriture en ce que les blocs de données transbordés sont transmis à la mémoire de destination à travers le circuit de cadrage 80 dès leur réception de la mémoire source. Aucune latence supplémentaire n'est introduite à ce niveau.

Annexe 1

```
1    si la mémoire de destination est l'unité de mémoire principale MMU
2            tid := 1x;
3    sinon
4            tid := 0x;
5    sid := "identificateur du port 51, 54, 55 en liaison avec la mémoire source";
6    we := 0
7            lgthxn := 1 + (lgthxmB + rad[{0} j+k:n] - 1) / 2ⁿ;
8    rpa 0:j := rad[{0} 0:j];
9    ripa 0:k := rad[{0} j:k];
10   si (( 2ⁿ - rad[{0} j:k] ) <= lgthxn )
11           rlp := 0;
12           rac 0:k+1 := 2ⁿ - rad[{0} j:k];
13           lgthxn := lgthxn - (2ⁿ - rad[{0} j:k]);
14   sinon
15           rlp := 1;
16           rac 0:k+1 := lgthxn;
17   wpa0:j := wad[{0}0:j];
18   wipa0:k := wad[{0}j:k];
19   wmskb0:n := wad[{0}j+k:n];
20   wmske0:n := (wad[{0}j+k:n]+lgthmB-1) modulo 2ⁿ;
21   dswp 0:n := wad[{0}j+k:n] - rad[{0}j+k:n];
22   ovfb := dépassement(wad[{0}j+k:n] - rad[{0}j+k:n]);
23   ovfe := dépassement(wmske0:n - dswp0:n);
24   si la mémoire de destination est l'unité de mémoire distante
25           dsrp0:n := 000;
26   sinon
27           dsrp0:n := wad[{0}j+k:n];
28   we := 1
```

Annexe 2

```
1    rnpa0:j := rnad[{i}0:28];
2    si (2^n <= lgthxn)
3         rnlp := 0;
4         rnac0:h := 2^n;
5         lgthxn := lgthxn - 2^n;
6    sinon
7         rnlp := 1;
8         rnac0:h := lgthxn;
9    rnv := 1;
10   wnpa0:j := wad[{i}0:j];
11   wnv := 1;
12   fin;
```

**Revendications**

1. Circuit électrique (5) pour transborder des blocs de données d'une unité mémoire source (8,9,12) vers une unité mémoire cible (12,8,9), au moyen d'un chemin de données (5,6,7), les blocs transbordés n'étant pas nécessairement cadrés sur les blocs de la mémoire source et de la mémoire cible, caractérisé en ce qu'il comprend un circuit (42) permettant de faire un cadrage avec un grain égal à la largeur du chemin de données.

2. Circuit selon la revendication 1 caractérisé en ce que le circuit (42) comprend

   - des moyens (70,71) de génération d'adresses de lecture dans la mémoire source,
   - des moyens (60,61) de génération d'adresses d'écriture dans la mémoire cible,
   - des moyens de mémorisation (80) de capacité égale à celle du contenu d'un bloc et subdivisés en sous blocs de taille correspondant au grain de cadrage.

3. Circuit selon l'une des revendications précédentes caractérisé en ce que les moyens de mémorisation (80) sont constitués d'un registre à décalage.

4. Circuit selon la revendication 2 ou 3 caractérisé en ce que les moyens (80) comprennent une pile (81) dans laquelle l'écriture de blocs en provenance de la mémoire source se fait par sous blocs au moyen d'un pointeur contenu dans un registre DSWP initialisé à une valeur égale au décadrage entre la mémoire source et la mémoire cible, et dans laquelle la lecture de blocs à transférer vers la mémoire cible se fait par sous blocs au moyen d'un pointeur contenu dans un registre DSRP.

5. Circuit selon la revendication 4 caractérisé en ce que le registre DSRP est initialisé à une valeur pointant sur le premier élément de la pile (81).

6. Circuit selon la revendication 4 caractérisé en ce que le registre DSRP est initialisé à une valeur égale à l'adresse du premier sous bloc écrit dans le premier bloc de la mémoire cible, modulo la longueur d'un bloc.

7. Calculateur (1) comprenant au moins une unité processeur (2) pour déclencher des transbordements entre son unité de mémoire principale (9) et au moins une unité de mémoire étendue distante (8) au moyen d'un chemin de données (5,6,7) caractérisé en ce qu'il comprend au moins un circuit (5) selon l'une des revendications précédentes.

# FIG.1

# FIG. 2

FIG.3

EP 0 813 154 A1

# FIG.4

C2LB

C2MB

CM    50

61

60    62

CPBD

CPBA

WE

SID

TID

80

70

71

L2CB

M2CB

C2LB

C2MB

# FIG.5

## FIG.6

CPBD

RNLP   RNPA 0:j        RNV   RNAC 0:h        ~70

RLP   RPA 0:j   R1PA 0:k   +q  ~75   RAC 0:h   -q   ~72

CPBD                                                ~71

## FIG.7

C2LB

C2MB

~80

CPBD

DSWP 0:n   +1   ~82

DSRP 0:n   +1   ~83

~81

L2CB

M2CB

**Office européen des brevets**

**RAPPORT DE RECHERCHE EUROPEENNE**

Numero de la demande

EP 97 40 1296

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR 2 644 260 A (NIPPON ELECTRIC CO) 14 septembre 1990<br>* page 1, ligne 9 - ligne 26 *<br>* page 6, ligne 12 - ligne 35 *<br>* page 9, ligne 31 - page 11, ligne 24 *<br>* abrégé; revendications 1-3; figure 4 *<br>--- | 1,2,7 | G06F13/40<br>G06F13/16 |
| A | US 5 446 848 A (WHITLOCK GARY C ET AL) 29 août 1995<br>* colonne 3, ligne 4 - ligne 22 *<br>* colonne 6, ligne 7 - ligne 50 *<br>--- | 1-7 | |
| A | US 4 855 903 A (CARLETON HERBERT R ET AL) 8 août 1989<br>* colonne 8, ligne 37 - colonne 9, ligne 18 *<br>* abrégé *<br>* colonne 7, ligne 50 - ligne 68 *<br>----- | 1-7 | |

**DOMAINES TECHNIQUES RECHERCHES (Int.Cl.6)**

G06F

Le présent rapport a été établi pour toutes les revendications

| Lieu de la recherche | Date d'achèvement de la recherche | Examinateur |
|---|---|---|
| LA HAYE | 26 septembre 1997 | Nguyen Xuan Hiep, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)